# EUROPEAN PATENT APPLICATION

(11) **EP 1 525 973 A1**
(43) Date of publication of application: **27.04.2005**
(21) Application number: 04256488.0
(22) Date of filing: 21.10.2004
(51) Int. Cl.: B29C 67/00

(54) **Systems and methods for reducing waste in solid freeform fabrication**

(30) Priority: 23.10.2003 US 691761
(71) Applicant: Hewlett-Packard Development Company, L.P., Houston, TX 77070 (US)
(72) Inventor: Nielsen, Jeffrey A., Corvallis, OR 97330 (US); Collins, David C., Philomath, OR 97370 (US)
(74) Representative: Jackson, Richard Eric

(57) **Abstract**

Systems and methods for producing three-dimensional objects are provided. One exemplary system 10, among others, includes a layer forming system 14. The layer forming system 14 is operative to implement criteria for forming the three-dimensional object. The three-dimensional object includes a plurality of layers and each layer includes layers selected from a shell layer and an interior layer. The shell layer includes at least one shell voxel, and the interior layer includes at least one interior voxel. In addition, the layer forming system 14 is operative to form the layers in an iterative manner according to the criteria, plane at least one layer in a manner according to the criteria, control waste produced by controlling the formation of the layers using the criteria provided, and form the object.

## Description

### BACKGROUND

Solid freeform fabrication (SFF) or layered manufacturing (LM) is a fabrication technology that builds an object of any complex shape layer by layer or point by point without using a pre-shaped tool (die or mold). This process begins with creating a Computer Aided Design (CAD) file to represent the geometry of a desired object. SFF technology enables direct translation of the CAD image data into a three-dimensional object. SFF technology can be used in applications such as verifying CAD database, evaluating design feasibility, testing part functionality, assessing aesthetics, checking ergonomics of design, aiding in tool and fixture design, creating conceptual models and sales/marketing tools, generating patterns for investment casting, reducing or eliminating engineering changes in production, and providing small production runs.

Several principal forms of solid freeform fabrication involve a liquid ejection process. These techniques involve adding or depositing a build composition to form predetermined areas of a layer in a point-by-point manner. Predetermined areas can also be formed using a multiplicity of points that may be deposited at the same time (e.g., ink-jet technology). These predetermined areas together constitute a thin section of a three-dimensional object as defined by a CAD geometry. Successive layers are then deposited in a predetermined sequence with a layer being affixed to its adjacent layers forming an integral three dimensional, multi-layer object. There are two main types of solid freeform fabrication that use liquid-ejection: binder-jetting systems and bulk-jetting systems.

Binder-jetting systems create objects by ejecting a binder onto a flat bed of powdered build material. Each powder layer may be dispensed or spread as a dry powder or a slurry. Whenever the binder is selectively ejected into the powder layer, the powder is bound into a cross section or layer of the object being formed.

Bulk-jetting systems generate objects by ejecting a solidifiable build material and a solidifiable support material onto a platform. The support material, which is temporary in nature, is dispensed to enable overhangs in the object and can be of the same or different material from the object.

Typically, a bulk jetting SFF system includes a dispensing system such as an ink-jet dispensing system, a build platform, a planing system, a waste system, and a curing system. In general, currently used systems produce a large amount of waste. The waste is hazardous, especially in the uncured state. This is particularly troublesome when the SFF systems are used in non-industrial environments, where the tolerance for producing large amounts of hazardous waste is low due to the costs and logistics associated with disposing the waste. Even in industrial environments, the cost of appropriate disposal can be a burdensome cost to employing a SFF system

### SUMMARY

Briefly described, embodiments of this disclosure include systems for producing three-dimensional objects. One exemplary system, among others, includes a layer forming system. The layer forming system is operative to implement criteria for forming the three-dimensional object. The three-dimensional object includes a plurality of layers and each layer includes layers selected from a shell layer and an interior layer. The shell layer includes at least one shell voxel, and the interior layer includes at least one interior voxel. In addition, the layer forming system is operative to form and plane the layers in an iterative manner according to the criteria, plane at least one layer in a manner according to the criteria, control waste produced by controlling the formation of the layers using the criteria provided, and form the object.

Methods of producing three-dimensional objects are also provided. One exemplary method, among others, includes: providing criteria about the three-dimensional object, the three-dimensional object is divided into layers, the layers include a shell layer and an interior layer, the shell layer includes at least one shell voxel, the interior layer includes at least one interior voxel, the criteria indicate selected interior voxels of the at least one interior voxels to form for each layer, the criteria indicate a sequence in which to form each layer, and the selected interior voxels for each layer in the sequence include a different combination of interior voxels; forming a plurality of layers according to the criteria; planing each layer; and forming the three-dimensional object.

Another embodiment of producing three-dimensional objects includes: providing a criteria for forming the three-dimensional object, the three-dimensional object includes a plurality of layers, each layer includes layers selected from a shell layer and an interior layer, the shell layer includes at least one shell voxel, and the interior layer includes at least one interior voxel; forming and planing the layers in an iterative manner using the criteria provided; controlling an amount of waste produced by using the criteria provided; and forming the three-dimensional object.

Still another embodiment of producing three-dimensional objects includes: (a) providing criteria about the three-dimensional object, the three-dimensional object is divided into complete layers and partial layers, the criteria indicate that after a specified number of complete layers are formed a partial layer is formed, the partial layer includes a shell layer and does not include an interior layer, and the complete layer includes the shell layer and the interior layer; (b) forming a base layer, the base layer includes a shell layer and does not include an interior layer; (c) planing the base layer; (d) forming a complete layer according to the criteria; (e) planing the complete layer; (f) forming a partial layer according to the criteria; (g) planing the partial layer; and (h) repeating steps (d) through (g) until the three dimensional object is formed.

### BRIEF DESCRIPTION OF THE DRAWINGS

Many aspects of the invention can be better understood with reference to the following drawings. The components in the drawings are not necessarily to scale. Moreover, in the drawings, like reference numerals designate corresponding parts throughout the several views.
FIG. 1 illustrates an embodiment of a solid freeform fabrication (SFF) system.
FIG. 2 is a representative flow diagram for an embodiment of a method of forming a three-dimensional object using the SFF system of FIG. 1.
FIGS. 3A through 3G are a representative diagram for an embodiment of a method of forming a three-dimensional object using the SFF system of FIG. 1.
FIG. 4 is a representative flow diagram for an embodiment of a method of forming a three-dimensional object using the SFF system of FIG. 1.
FIG. 5 is a representative flow diagram for an embodiment of a method of forming a three-dimensional object using the SFF system of FIG. 1.
FIG. 6 is a representative flow diagram for an embodiment of a method of forming a three-dimensional object using the SFF system of FIG. 1.
FIG. 7 is a top view of a cross-section of an embodiment of a three-dimensional object.
FIGS. 8A through 8F are a representative diagram for an embodiment of a method of forming the three-dimensional object in FIG. 7.
FIG. 9 is a representative flow diagram for an embodiment of a method of forming a three-dimensional object using the SFF system of FIG. 1.

### DETAILED DESCRIPTION

Systems and methods for reducing the amount of waste produced while fabricating three-dimensional objects are provided. In particular, the embodiments relate to the manufacture of three-dimensional objects by solid freeform fabrication (SFF) systems and methods. The term three-dimensional object refers to objects that are sufficiently rigid to maintain a fixed volume and shape to an extent, which is appropriate for use in SFF systems. The amount of waste produced while fabricating the three-dimensional object is reduced by dispensing build material onto selected areas during the build process, so that a smaller surface area is milled during the milling process.

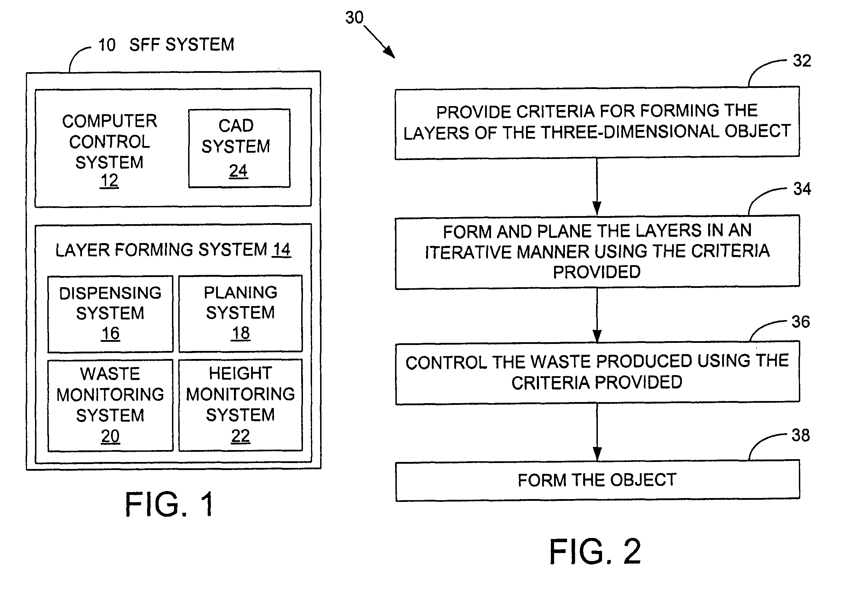

FIG. 1 illustrates a block diagram of a representative SFF system 10 that includes a computer control system 12 and a layer forming system 14. The layer forming system 14 includes, but is not limited to, a dispensing system 16, a planing system 18. In addition, the layer forming system 14 can include a waste monitoring system 20 and/or a height monitoring system 22. The layer forming system 14 can also include a conventional curing system (e.g., an ultraviolet or visible radiation curing system), a positioning system, and a build platform temperature control system. The computer control system 12 includes a process control system that is operative to control the dispensing system 16, the planing system 18, the waste monitoring system 20, and the height monitoring system 22. In addition, the computer control system 12 includes, but is not limited to, a Computer Aided Design (CAD) system 24 or other SSF CAD-related systems.

The dispensing system 16 includes, but is not limited to, conventional ink-jet technologies and conventional coating technologies, which dispense a build material or precursor components thereof that form the three-dimensional object. Ink-jet technology, such as drop-on-demand and continuous flow ink-jet technologies, can be used to dispense build material or precursor components thereof onto a build platform. The dispensing system 16 can include at least one conventional ink-jet printhead (*e*.*g*., thermal ink-jet printhead and/or a piezo ink-jet print head) operative to dispense (*e*.*g*., jet) the build material or precursor components thereof through one or more of a plurality of ink-jet printhead dispensers. The build material can include one or more components known in the art such as, but not limited to, build materials, initiators, colorants (e.g., dyes, pigments, inks), and dispersants.

The SFF system 10 can be incorporated into processes that are used to fabricate or construct three-dimensional objects in an iterative layered process on a support (e.g., a structure used to support a region of the three-dimensional object while it is being fabricated). The computer control system 12 is capable of being selectively adjusted to control the output from the dispensing system 16, which controls the thickness and pattern of each component in each layer of the iterative process. Additional details regarding the layers of the three-dimensional object are discussed below.

The planing system 18 can include a planing device that normalizes the height of one or more of the layers of the three-dimensional object after the layer is formed. The planing device (e.g., heated or unheated) normalizes the height of the layers to a predetermined height or thickness. An example of a planing device includes a pre-heated rotating planarizer that passes over each layer after the layer has been formed. In particular, the pre-heated cylindrical roller (planarizer) is precisely passed over each layer and locally melts a portion of the build material of the layer. Some of the build material adheres to the surface of the planarizer as it rolls to thereby normalize the layer to conform to the desired thickness. A wiping or scraping device such as a blade can be used to peel or skive off the excess build material from the planarizer, thereby producing waste material.

The waste monitoring system 20 collects the waste obtained from planing each layer. The amount of waste produced from planing each layer can be monitored using techniques known in the art, such as a waste weighing device.

It should be noted that after planing the layers, the layer could be cured. In general, the layers can be cured by full exposure or by scan exposing. To enhance layer-to-layer adhesion, it may be useful to only partially cure each layer during the fabrication process. A full cure could be accomplished by placing the object in a light box after removal from the fabrication tool. In addition, the curing process can be performed after the layers are disposed on a build platform (e.g., flood exposure or scan exposure). Furthermore, the curing process can be performed in a substantially contemporaneous manner by scan exposing the build material as the build material is dispensed.

Prior to or after planing, the height of the layers can be measured using the height monitoring system 22. In particular, the height monitoring system 22 can be used to measure certain portions of the layers. The relative heights of portions of the layers can be compared and used to form additional layers to reduce the amount of waste produced. The height monitoring system 22 can include, but is not limited to, laser profilometry systems and physical contact methods (e.g., linear variable differential transformer systems).

FIG. 2 is a flow diagram describing a representative method 30 for forming a three-dimensional object using the SFF system 10. In block 32, criteria for forming the layers of the three-dimensional object are provided. The criteria provide the layer forming system 14 with instructions on how to form each layer or one or more portions of each layer of the three-dimensional object. Use of the criteria enable the SFF system 10 to reduce the amount of waste produced during the fabrication of the three-dimensional object as compared to techniques used in the art. The criteria can be static (e.g., predetermined) or dynamic (e.g., can change during the fabrication of the three-dimensional object). Additional details regarding embodiments of the criteria are described in more detail below.

In block 34, the layers of the three-dimensional object are formed and planed according to the criteria provided. After one layer the build material is dispensed onto the build platform, the planing system 18 can be used to plane the layer. Then the process is repeated as necessary to produce the three-dimensional object in a layer-by-layer fashion.

As a result of forming the layers according to the criteria provided, the waste produced during planing the layers is reduced relative to layer formation methods used in the art, as shown in block 36. The amount of waste produced is the result of forming the layers according to the criteria. In general, the planing device does not come into contact with the entire layer and only planes a portion of each layer. After the layers have been formed and planed the three-dimensional object is formed, as shown in block 38.

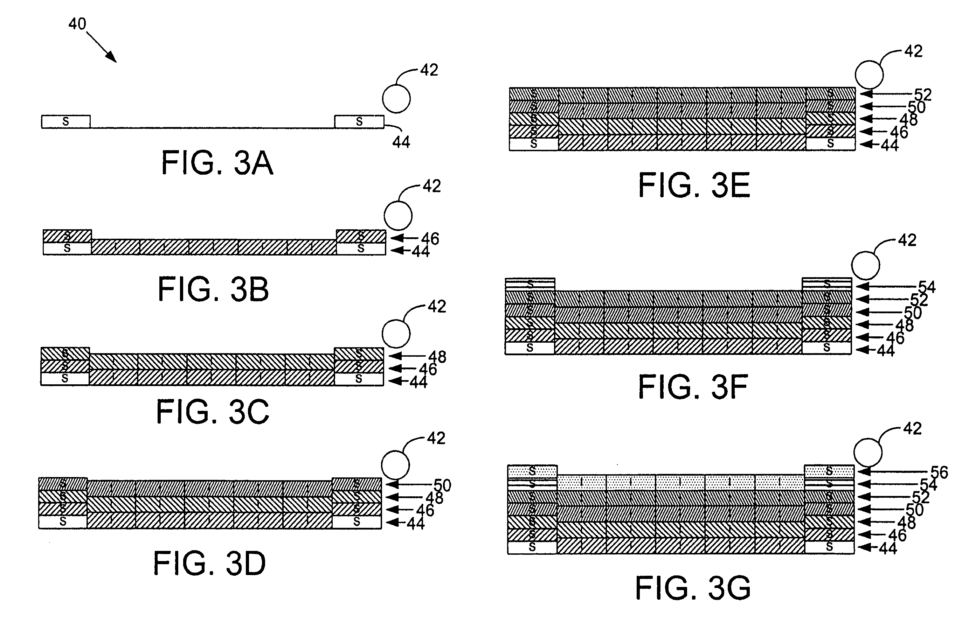

FIGS. 3A through 3G illustrates a representative method of forming the three-dimensional object 40 and limiting the amount of waste produced relatively currently used techniques. Prior to forming the three-dimensional object, the layer forming system 14 divides the three-dimensional object into a plurality of cross-sectional layers. Each layer can be further divided into a shell layer e.g., an exterior layer and/or another layer disposed within the interior of the three-dimensional object ) and an interior layer. A complete layer includes the formation of the shell layer (S) and the interior layer (I), while a partial layer includes the formation of the shell layer, but not the interior layer.

In general, the shell layer and the interior layer are made of the same material. However, the shell layer and the interior layer can be made of the same or different material. The distinction between shell layer and interior layer is the location on the each layer, as illustrated in FIGS. 3A through 3G. The shell layer is defined as an area within a certain distance in the x-, y-, and z-directions of transition between the layer and air, and layer and support. In other words, the shell layer represents the exterior side portions of the three-dimensional object.

In addition, the layer forming system 14 includes criteria regarding how the layers of the three-dimensional object are to be formed in order to reduce the amount of waste generated during the fabrication of the object. The criteria can include instructions such as, but not limited to, when to form a complete layer and a partial layer. The instructions to form a complete layer and a partial layer can be static instructions or dynamic instructions. Static instructions include, but are not limited to, forming a partial layer after the formation of a predetermined specific number of complete layers in an iterative manner. In one embodiment, the predetermined specific number can be associated with an experimentally determined average interior layer height for the particular SFF system as it relates to the height of the shell layer after planing. For example, if the height of the average interior layer is about 120-130% the height of the shell layer after planing, one can determine that after about four or five complete layers are formed a partial layer can be formed to reduce the amount of waste produced. Therefore, the predetermined specific number could be four or five. In another embodiment, the predetermined specific number can be selected by estimating, as opposed to experimentally determining, the average height of the interior layer relative to the shell layer after planing. In either case, the amount of waste produced can be decreased relative to currently used techniques.

The dynamic instructions can include, but are not limited to, determining when to form a partial layer based on feedback from the waste monitoring system 20 and/or the height monitoring system 22 as the three-dimensional object is being formed. For example, after each layer is formed, the height monitoring system 22 measures the height of the shell layers and interior layers, and if the height of the interior layers is within a certain percentage of the height of the shell layers, then a partial layer is formed. In another example, if the height of the interior layers is equal to or greater than the height of the shell layers, then a partial layer is formed.

In another example, the waste monitoring system 20 measures the amount of waste generated by planing each layer. If the amount of waste generated is greater than a waste standard, then a partial layer is formed. The waste standard can be determined in number of ways.

For example, the waste standard can be set at a certain percentage (e.g., about 5% to 95%) of waste produced by planing a complete layer. If the waste produced is equal to or greater than the percentage, then a partial layer is formed. The waste produced by planing a complete layer can be estimated by generating a test structure of a known size (e.g., the number of voxels of material) and monitoring the waste produced as the test structure is formed. From this information, the waste produced per voxel can be determined. This information can be used to calculate the amount of waste expected to be produced for the three-dimensional object of interest.

FIG. 3A illustrates a cross-section of a base layer of a three-dimensional structure. The base layer 44 is formed on a build platform and includes the shell layer, but does not include an interior layer. The base layer is planed using the planing device 42 of the planing system 18 to a known height. FIG. 3B illustrates a cross-section of the base layer 42 having a first layer 44 formed thereon. The first layer 44 includes a shell layer and an interior layer. The first layer 44 is planed using the planing system 18 to a known height. However, since the interior layer is positioned lower relative to the shell layer, the interior layer is not actually planed, which produces less waste than if the interior layer was the same height as the shell layer prior to planing. It should be noted that the interior layer has a greater absolute height than the shell layer after the planing process, but is positioned relatively lower since the shell layer of the first layer 44 is formed on the shell layer of the base layer.

FIGS. 3C through 3E illustrate the formation of a second layer 48, third layer 50, and fourth layer 52. It should be noticed that the height of the interior layers "catches up" to the height of the shell layers, since the absolute height of each interior layer is greater than the planed height of each shell layer. In FIG. 3E, prior to planing, the height of the fourth interior layer surpasses the height of the shell layers. After planing, the height of the shell layers and the height of the interior layers are substantially equivalent. As discussed above, the criteria would indicate that a partial layer be formed as the fifth layer 54. Accordingly, the fifth layer 54 formed is a partial layer, as shown in FIG. 3F. In FIG. 3G, the process starts again and continues until the three-dimensional object is formed.

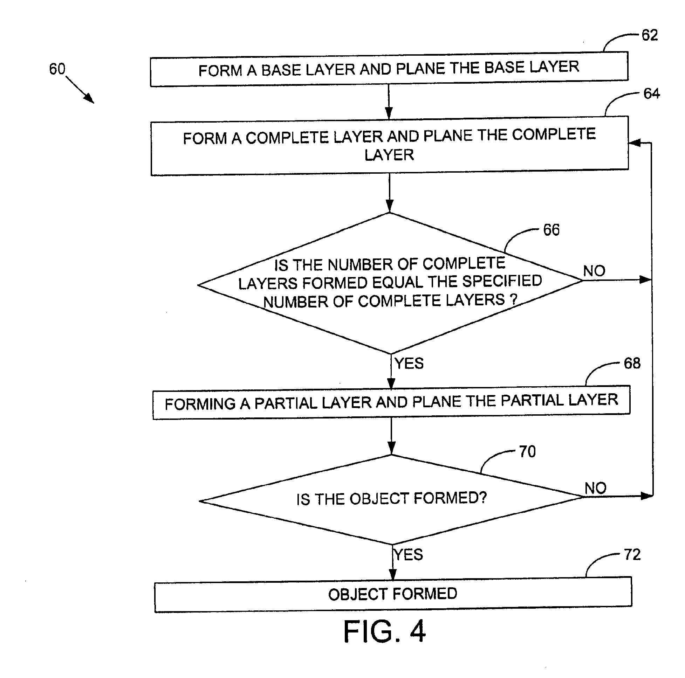

An example of a method of forming the three-dimensional object 60 is described in the flow diagram illustrated in FIG. 4. In block 62, a base layer is formed and planed. Next in block 64, a complete layer is formed and planed. In decision block 66, a determination is made regarding whether the number of complete layers formed equals the specified number of complete layers as provided by the criteria. If the determination is "no", the method flows back to block 64. If the determination is "yes" the method flows to block 68. In block 68, a partial layer is formed and planed. In decision block 70, a determination is made whether the three-dimensional object is formed. If the determination is "no" the method flows to block 64. If the determination is "yes" the method flows to block 72, which indicates that the three-dimensional object is formed.

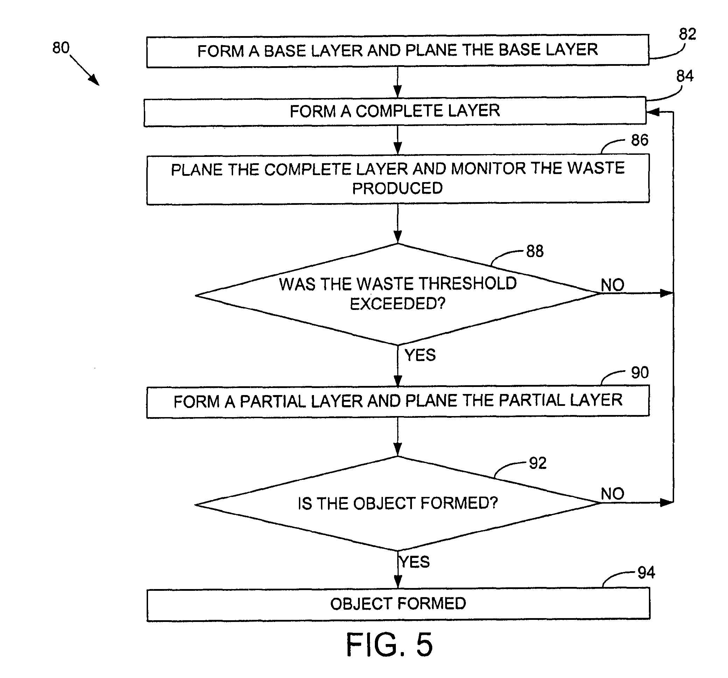

Another example of a method of forming the three-dimensional object 80 is described in the flow diagram illustrated in FIG. 5. In block 82, a base layer is formed and planed. Next in block 84, a complete layer is formed. In block 86, the complete layer is planed and the waste produced from planing is monitored. In decision block 88, a determination is made regarding whether a waste threshold was exceeded as provided by the criteria. If the determination is "no", the method flows back to block 84. If the determination is "yes" the method flows to block 90. In block 90, a partial layer is formed and planed. In decision block 92, a determination is made whether the three-dimensional object is formed. If the determination is "no" the method flows to block 84. If the determination is "yes" the method flows to block 94, which indicates that the three-dimensional object is formed.

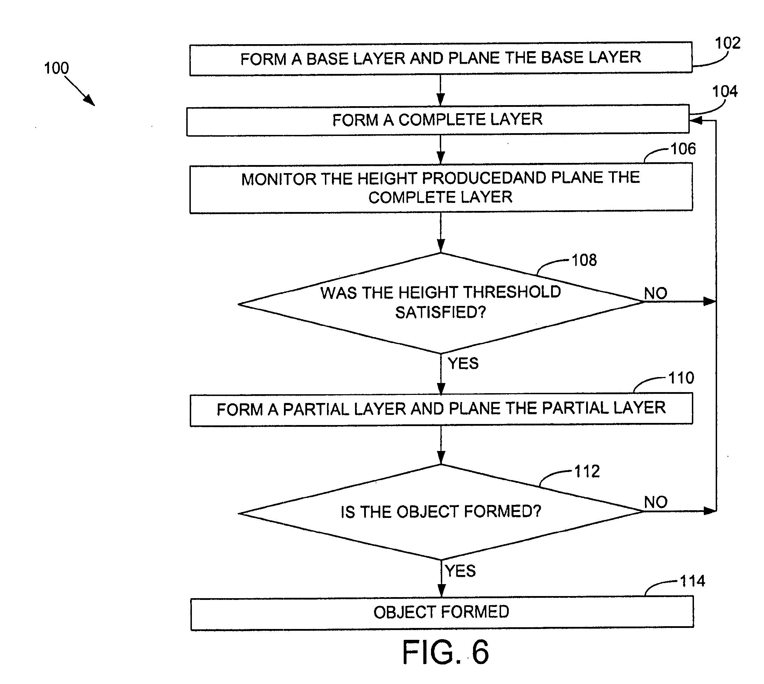

In still another example, a method of forming the three-dimensional object 100 is described in the flow diagram illustrated in FIG. 6. In block 102, a base layer is formed and planed. Next in block 104, a complete layer is formed. In block 106, the height of the complete layer is monitored and planed, in particular, the relative heights of the shell layer and the interior layer is determined. In decision block 108, a determination is made regarding whether a height threshold was met as provided by the criteria. If the determination is "no", the method flows back to block 104. If the determination is "yes" the method flows to block 110. In block 110, a partial layer is formed and planed. In decision block 112, a determination is made whether the three-dimensional object is formed. If the determination is "no" the method flows to block 104. If the determination is "yes" the method flows to block 114, which indicates that the three-dimensional object is formed.

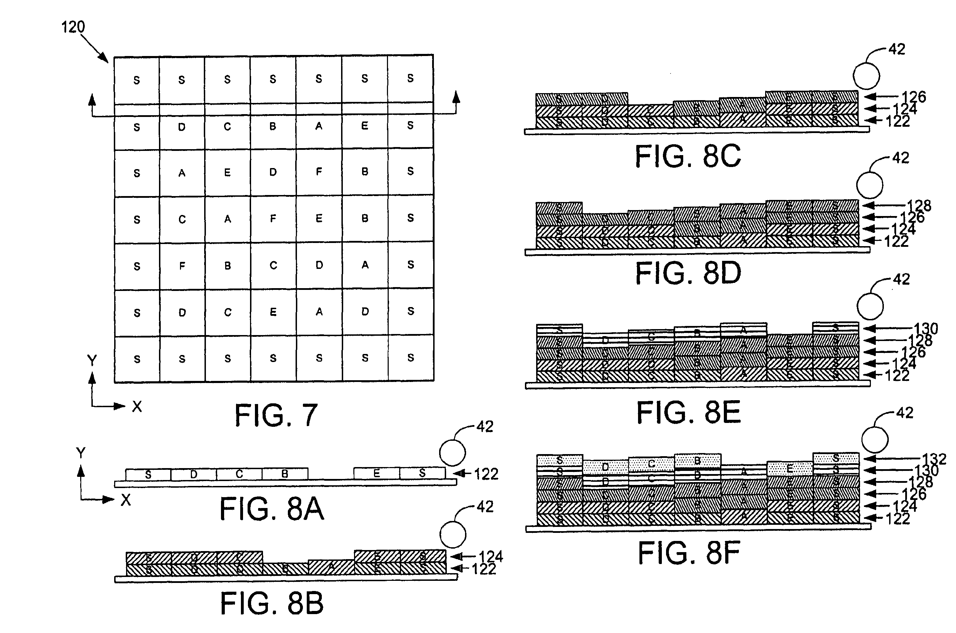

FIGS. 7 and 8A through 8F illustrate a representative method of forming the three-dimensional object 120 and limiting the amount of waste produced relative to currently used techniques. As mentioned above, the layer forming system 14 divides the three-dimensional object into a plurality of cross-sectional layers. Each layer can be further divided into a shell layer (i.e., an exterior layer) and an interior layer. A complete layer includes the formation of the shell layer and the interior layer, while a partial layer includes the formation of the shell layer, but not the interior layer. In addition, the shell layer and the interior layer can be sub-divided into one or more shell voxels (S) and one or more interior voxels (A...F), respectively.

In addition, the layer forming system 14 includes criteria regarding how the layers of the three-dimensional object are to be formed in order to reduce the amount of waste generated during the fabrication of the object. The criteria can include instructions such as, but not limited to, when to form one or more shell voxels and one or more interior voxels. The instructions to form shell voxels and/or interior voxels can be static instructions or dynamic instructions. Static instructions include, but are not limited to, forming predetermined selected shell voxels and/or predetermined selected interior voxels for a particular layer. For example, predetermined selected interior voxels includes forming certain interior voxels, while not forming other interior voxels. In other words, a portion of the interior is formed each time a layer is formed. In comparison, the partial layer described above would include forming 0% of the interior voxels. The predetermined selected interior voxels depends, in part, on the geometry of the three-dimensional object formed. In general, the predetermined selected interior voxels can range from greater than 0% to less than 100%, about 50% to 95%, and about 80 % to 95%.

In one embodiment, the predetermined selected interior voxels can be associated with an experimentally determined average waste standard for the particular SFF system after planing a layer. For example, the predetermined selected interior voxels can be selected to produce less than a certain amount of waste per layer planed.

The dynamic instructions can include, but are not limited to, determining predetermined selected interior voxels based on feedback from the waste monitoring system 20 and/or the height monitoring system 22 as the three-dimensional object is being formed. For example, the selected interior voxels can be increased/decreased after the height measuring system 22 measures the height of the interior voxels. In another example, the waste monitoring system 20 measures the amount of waste generated by planing each layer. If the amount of waste generated is greater than a waste standard, then the predetermined selected interior voxels are adjusted accordingly.

FIG. 7 illustrates a top view of a cross-section of a three-dimensional object. According to exemplar criteria, the cross-section of the three-dimensional object has been divided into a shell layer and an interior layer. The shell layer is located on the perimeter of the three-dimensional object. The shell layer includes one shell voxel and is denoted as "S". The interior layer has been subdivided into six interior voxels, which are denoted as "A", "B", "C", "D", and "E". According to the criteria, the base layer for the cross-section A-A (illustrated in FIGS. 8A through 8F) include a shell voxel and interior voxels "B", "C", "D", and "E". The first layer includes a shell voxel and interior voxels "A", "C", "D", and "E". The second layer includes a shell voxel and interior voxels "A", "B", "D", and "E". The third layer includes a shell voxel and interior voxels "A", "B", "C", and "E". The fourth layer includes a shell voxel and interior voxels "A", "B", "C", and "D". The fifth layer starts the sequence cycle over and therefore, includes a shell voxel and interior voxels "B", "C", "D", and "E". The sequence proceeds until the three-dimensional object is formed. The sequence cycle would be similar for other cross-sections of the three-dimensional object illustrated in FIG. 7.

FIG. 8A illustrates a cross-section of a base layer 122 of the three-dimensional structure shown in FIG. 7. The base layer 122 is formed on a build platform and includes the shell layer and selected interior voxels, where interior voxel "A" is not formed. The base layer 122 is planed using the planing device 42 of the planing system 18 to a known height. FIG. 8B illustrates a cross-section of the base layer 122 having a first layer 124 formed thereon. The first layer 124 includes a shell layer and a first set of selected interior voxels, where interior voxel "B" is not formed. The first layer 124 is planed using the planing system to a known height. However, since the interior voxel "A" was not formed in the base layer 122, interior voxel "A" of the first layer 124 appears to be part of the base layer 122. In other words, interior voxel "A" "drops" from the first layer 124 to the base layer 122. It should be noted that the interior voxel "A" of the first layer 124 has a greater absolute height than the other interior voxels of the first layer 124 after the planing process, since interior voxel "A" is positioned relatively lower in the base layer 122. Consequently, less waste is generated by the planing process since interior voxel "B" is not formed and interior voxel "A" is positioned relatively lower than the other interior voxels of the first layer 124.

FIG. 8C illustrates a cross-section of the first layer 124 having a second layer 126 formed thereon. The second layer 126 includes a shell layer and a second set of selected interior voxels, where interior voxel "C" is not formed. The second layer 126 is planed using the planing system 18 to a known height. However, since the interior voxel "A" was not formed in the base layer 122 and interior voxel "B" was not formed in the first layer 124, interior voxels "A" and "B" of the second layer 126 appear to be part of the first layer 124. In other words, interior voxels "A" and "B" of the second layer 126 "drop" from the second layer 126 to the first layer 124. It should be noted that the interior voxels "A" of the first layer 124 and second layer 126 have a greater absolute height than other interior voxels of the first layer 124 ("C", "D", and "E") and second layer 126 ("D" and "E") after the planing process. Therefore, the height of the interior voxels "A" of the first 124 and second layers 126 is greater than the height of the planed base and first layer 124. It should also be noted that interior voxel "B" of the second layer 126 has a greater absolute height than other interior voxels of the second layer 126 ("D" and "E") after the planing process. Since interior voxel "C" is not formed and interior voxels "A" and "B" are positioned relatively lower than other interior voxels of the second layer 126, less waste is generated by the planing process.

FIG. 8D illustrates a cross-section of the second layer 126 having a third layer 128 formed thereon. The third layer 128 includes a shell layer and a third set of selected interior voxels, where interior voxel "D" is not formed. The third layer 128 is planed using the planing system 18 to a known height. However, since the interior voxel "A" was not formed in the base layer 122, interior voxel "B" was not formed in the first layer 124, and interior voxel "C" was not formed in the second layer 126, interior voxels "A", "B", and "C" of the third layer 128 appear to be part of the second layer 126. In other words, interior voxels "A", "B", and "C" of the third layer 128 "drop" from the third layer 128 to the second layer 126.

It should be noted that the interior voxels "A" of the first layer 122, second layer 124, and third layer 126 each have a greater absolute height than other interior voxels of the first layer 122 ("C", "D", and "E"), second layer 124 ("D" and "E"), and third layer 126 ("E") after the planing process. Therefore, the height of the interior voxels "A" of the first, second, and third layers 124, 126, and 128 is greater than the height of the planed base, first, and third layers 122, 124, and 128. In fact, the height of the interior voxels "A" of the first, second, and third layers 124, 126, and 128 is approaching (i.e., "catching up") to the height of the shell layers of the base, first, second, and third layers 122, 124, 126, and 128.

In addition, interior voxel "B" of the second layer 126 and the third layer 128 each have a greater absolute height than other interior voxels of the second layer 126 ("D" and "E") and the third layer 128 ("E") after the planing process. Therefore, the height of the interior voxels "B" of the first, second, third layers 124, 126, and 128 is greater than the height of the planed base, first, and third layers 122, 124, and 128. In fact, the height of the interior voxels "B" of the first, second, and third layers 124, 126, and 128 is approaching (i.e., "catching up") to the height of the shell layers of the base, first, second, and third layers 122, 124. 126, and 128.

It should also be noted that interior voxel "C" of the third layer 128 has a greater absolute height than other interior voxels of the third layer 128 ("E") after the planing process.

Since interior voxel "D" is not formed and interior voxels "A", "B", and "C" are positioned at relatively lower than other interior voxels of the third layer 128, less waste is generated by the planing process.

FIG. 8E illustrates a cross-section of the third layer 128 having a fourth layer formed thereon 130. The fourth layer 130 includes a shell layer and a fourth set of selected interior voxels, where interior voxel "E" is not formed. The fourth layer 130 is planed using the planing system to a known height. However, since the interior voxel "A" was not formed in the base layer 122, interior voxel "B" was not formed in the first layer 124, interior voxel "C" was not formed in the second layer 126, and interior voxel "D" was not formed in the third layer 128, interior voxels "B", "C", and "D" of the fourth layer 130 appear to be part of the third layer 128. In other words, interior voxels "B", and "C" of the fourth layer 130 "drop" from the fourth layer 130 to the third layer 128. In addition, since the absolute height of each of interior voxel "A" is greater than the planed height of each corresponding layer, the height of interior voxels "A" for the first, second, third, and fourth layers 124, 126, 128, and 130 "catches up" with or surpasses the height of the base, first, second, third, and fourth layers 122, 124, 126, 128, and 130 after planing. Therefore, the planing of the fourth layer 130 may include planing interior voxel "A" of the fourth layer 130. Additional details regarding the interior voxels "B", "C", "D", and "E" for the fourth layer 130 are similar to those already described for the base, first, second, and third layers 122, 124, 126, and 128.

FIG. 8F illustrates a cross-section of the fourth layer 130 having a fifth layer 132 formed thereon. The fifth layer 132 includes a shell layer and a fifth set of selected interior voxels, where interior voxel "A" is not formed. The fifth layer 132 is planed using the planing system to a known height. Formation of the fifth layer 132 represents the restart of the sequence of forming interior layers, since as in FIG. 8A interior voxel "A" is not formed. The sequence proceeds until the three-dimensional object is formed.

It should be noted that the absolute height of each of interior voxel "B" is greater than the planed height of each corresponding layer, the height of interior voxels "B" for the base, second, third, fourth, fifth layers 122, 126, 128, 130, and 132 "catches up" with or surpasses the height of the base, first, second, third, fourth, and fifth layers 122, 124, 126, 128, 130, and 132 after planing. Therefore, the planing of the fifth layer 132 may include planing interior voxel "B" of the fifth layer 132. Additional details regarding the interior voxels "A", "C", "D", and "E" for the fifth layer 132 are similar to those already described for the base, first, second, third, and fourth layers 122, 124, 126, 128, and 130.

A similar progression occurs for the entire surface of the three-dimensional object illustrated in FIG. 7. Therefore, forming the three-dimensional object according to the criteria can decrease the amount of waste produced during the SFF process.

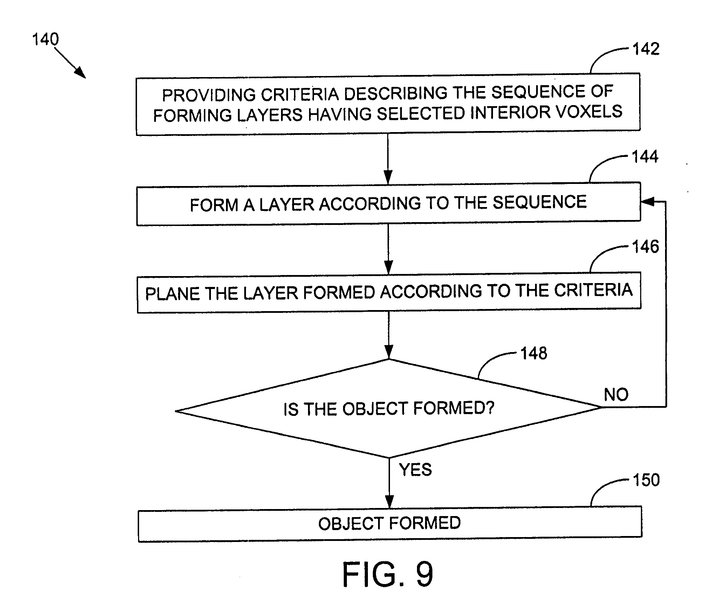

In another embodiment, a method of forming the three-dimensional object 140 is described in the flow diagram illustrated in FIG. 9. In block 142, criteria are provided describing the sequence to form selected interior voxels. Next in block 144, a layer is formed according to the criteria. In block 146, the layer is planed. In decision block 148, a determination is made whether the three-dimensional object is formed. If the determination is "no" the method flows to block 144. If the determination is "yes" the method flows to block 150, which indicates that the three-dimensional object is formed.

Many variations and modifications may be made to the above-described embodiments. All such modifications and variations are intended to be included herein within the scope of this disclosure and protected by the following claims.

## Claims

1. A method of producing a three-dimensional object, comprising the steps of:
(a) providing criteria about the three-dimensional object, the three-dimensional object is divided into complete layers and partial layers, the criteria indicate that after a specified number of complete layers are formed a partial layer is formed, the partial layer includes a shell layer and does not include an interior layer, and the complete layer includes the shell layer and the interior layer 32;
(b) forming a base layer, the base layer includes a shell layer and does not include an interior layer 34;
(c) planing the base layer 34;
(d) forming a complete layer according to the criteria 34;
(e) planing the complete layer 34;
(f) forming a partial layer according to the criteria 34;
(g) planing the partial layer 34; and
(h) repeating steps (d) through (g) until the three dimensional object is formed 38.

2. The method of claim 1, further comprising:
monitoring waste produced for each planing 36; and
modifying the criteria if the waste produced is above a waste threshold.

3. The method of claim 1, further comprising:
determining a height of the shell layers and a height of the interior layers 106; and
modifying the criteria if the height of the interior layers is greater than or equal to the height of the shell layers, wherein the criteria would indicate to form the partial layer as the next layer formed.

4. A method of producing a three-dimensional object, comprising the steps of:
providing criteria about the three-dimensional object, the three-dimensional object is divided into layers, the layers include a shell layer and an interior layer, the shell layer includes at least one shell voxel, the interior layer includes at least one interior voxel, the criteria indicate selected interior voxels of the at least one interior voxels to form for each layer, the criteria indicate a sequence in which to form each layer, and the selected interior voxels for each layer in the sequence include a different combination of interior voxels 32;
forming a plurality of layers according to the criteria 34;
planing at least one layer 34; and
forming the three-dimensional object 38.

5. The method of claim 4, wherein the selected interior voxels of each layer include less than 100% of the interior voxels of each layer.

6. A method of producing a three-dimensional object, comprising the steps of:
providing a criteria for forming the three-dimensional object, the three-dimensional object includes a plurality of layers, each layer includes layers selected from a shell layer and an interior layer, the shell layer includes at least one shell voxel, and the interior layer includes at least one interior voxel 32;
forming and planing the layers in an iterative manner using the criteria provided 34;
controlling an amount of waste produced by using the criteria provided 36; and
forming the three-dimensional object 38.

7. A system for producing a three-dimensional object, comprising:
a layer forming system 14 operative to:
implement criteria for forming the three-dimensional object, the three-dimensional object includes a plurality of layers, each layer includes layers selected from a shell layer and an interior layer, the shell layer includes at least one shell voxel, and the interior layer includes at least one interior voxel;
form the layers in an iterative manner according to the criteria;
plane at least one layer in a manner according to the criteria;
control waste produced by controlling the formation of the layers using the criteria provided; and
form the object.

8. The system of claim 7, wherein the layer forming system 14 includes a waste monitoring system 20 operative to monitor the waste produced during the planing of each layer.

9. The system of claim 7, wherein the layer forming system 14 includes a dispensing system 16 operative to form the layers, and a planing system operative to plane each layer.

10. The system of claim 7, wherein the layer forming system 14 includes a height monitoring 22 system operative to measure the heights the layers.
